**Europäisches Patentamt**

**European Patent Office**

**Office européen des brevets**

(19)

(11) Veröffentlichungsnummer : **0 412 961 B1**

(12) **EUROPÄISCHE PATENTSCHRIFT**

(45) Veröffentlichungstag der Patentschrift :
04.03.92 Patentblatt 92/10

(51) Int. Cl.⁵ : **G06K 9/22,** G06F 3/023

(21) Anmeldenummer : 87903239.9

(22) Anmeldetag : 11.05.87

(86) Internationale Anmeldenummer :
PCT/DE87/00219

(87) Internationale Veröffentlichungsnummer :
WO 88/02522 07.04.88 Gazette 88/08

(54) VERFAHREN UND VORRICHTUNG ZUR EINGABE VON SCHRIFTZEICHEN IN GERÄTEN MIT EINER ZIFFERNTASTATUR.

(30) Priorität : 29.09.86 DE 3633008

(43) Veröffentlichungstag der Anmeldung :
20.02.91 Patentblatt 91/08

(45) Bekanntmachung des Hinweises auf die
Patenterteilung :
04.03.92 Patentblatt 92/10

(84) Benannte Vertragsstaaten :
AT BE CH DE FR GB IT LI NL SE

(56) Entgegenhaltungen :
DE-A- 3 340 370

(56) Entgegenhaltungen :
GB-A- 2 127 196
IBM Technical Disclosure Bulletin, vol. 6, no. 2,
July 1963, (New York, US), G. L. Clapper:
"Write-in matrix circuit", see pages 53-54

(73) Patentinhaber : ROBERT BOSCH GmbH
Postfach 30 02 20
W-7000 Stuttgart 30 (DE)

(72) Erfinder : KNOLL, Peter
Albert-Schweizer-Strasse 9
W-7505 Ettlingen 1 (DE)
Erfinder : GEISER, Georg
Reinhold-Schneider-Strasse 71h
W-7500 Karlsruhe 51 (DE)

## Beschreibung

### Stand der Technik

Die Erfindung betrifft ein Verfahren mit einer Vorrichtung zur handschriftlichen Eingabe von Schriftzeichen nach der Gattung des Hauptanspruchs.

Bei zahlreichen technischen Geräten hat der Mensch als Benutzer nicht nur Ziffern, sondern auch alphanumerische Zeichen einzugeben. Eine wichtige Gruppe von vorgeschlagenen oder in Entwicklung befindlichen Geräten ist dadurch gekennzeichnet, daß überwiegend Ziffern und nur gelegentlich Buchstaben von geringer Zahl zu übermitteln sind. Beispiele: Kraftfahrzeug-Informationssysteme (Navigationseinrichtungen usw.), Meß- und Datenerfassungsgeräte, Bildschirmtext, Auskunftssysteme, Fahrkartenautomaten, Funkrufdienst. Bei einer weiteren Gruppe von technischen Geräten könnte durch eine Eingabemöglichkeit für Buchstaben eine wesentlich ergonomisch günstigere Mensch-Maschine-Interaktion erreicht werden im Vergleich zur bloßen Zifferneingabe. Beispielsweise wäre es beim Telefon günstig, wenn statt der schwer im Gedächtnis zu behaltenden Anschlußnummer eines Anzurufenden dessen Namen (und Anschrift) ausreichen, z. B. in innerbetrieblichen Nebenstellenanlagen. Für diese beiden Gruppen wird eine Eingabemöglichkeit für Buchstaben benötigt, die folgende Eigenschaften aufweist: preisgünstig, klein, benutzerfreundlich und zuverlässig. Die von der Schreibmaschine und von Rechnern bekannte alphanumerische Tastatur erfüllt die beiden erstgenannten Anforderungen in vielen Fällen nicht. Die Spracheingabe kommt wegen des hohen Preises und der noch ungenügenden Zuverlässigkeit oft nicht in Betracht. Die Verwendung einer Zifferntastatur ist wegen der notwendigen Mehrfachbelegung der Tasten für den Benutzer ungünstig.

Die bekannten Verfahren zur handschriftlichen Eingabe basieren auf einem speziellen Schreibtablett und-/oder Schreibstift zur Erfassung der Schreibbewegungen. Sie besitzen dadurch den Nachteil, daß sie in dem Fall, wo die überwiegende Zahl der Eingabeaktionen aus Zifferneingabe mittels einer Zifferntastatur besteht und nur wenige Buchstaben einzugeben sind, die Forderungen nach zusätzlichem Platz für ein Schreibfeld neben der Zifferntastatur und nach zusätzlichem erheblichem gerätetechnischem Aufwand für. Erfassung und Auswertung der Schreibbewegungen aus Rostengründen oft nicht erfüllbar sind.

Ein Verfahren gemäß dem ersten Teil des Hauptanspruchs ist aus GB-A-2 127 196 bekannt. Gemäß diesem Stand der Technik wird de Mustererkennungsschritt erst nach Vollendung des Schreibvorgangs für ein Schriftzeichen eingeleitet.

Der Erfindung liegt die Aufgabe zugrunde, ein zeitsparendes Verfahren zu entwickeln, das dem Benutzer eines im wesentlichen mit einer Zifferntastatur ausgestatteten technischen Gerätes die Eingabe von Buchstaben ermöglicht, ohne daß ein separates Schreibtablett oder ein Schreibstift oder eine Maus benötigt wird. Ferner soll dieses Verfahren so konzipiert sein, daß die Variationsbreite der vom Benutzer gewünschten handschriftlichen Zeichen deutlich eingeschränkt ist, um so die automatische Klassifikation der eingegebenen Schriftzeichen zu erleichtern und die Zahl der Fehlklassifikationen zu verringern.

Diese Aufgabe wird erfindungsgemäß durch die Merkmale des Hauptanspruchs gelöst.

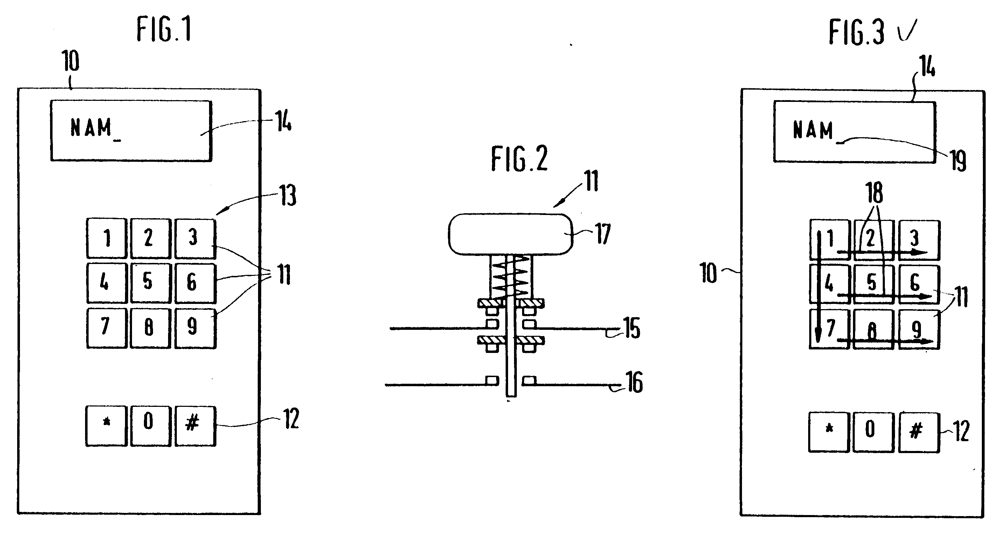

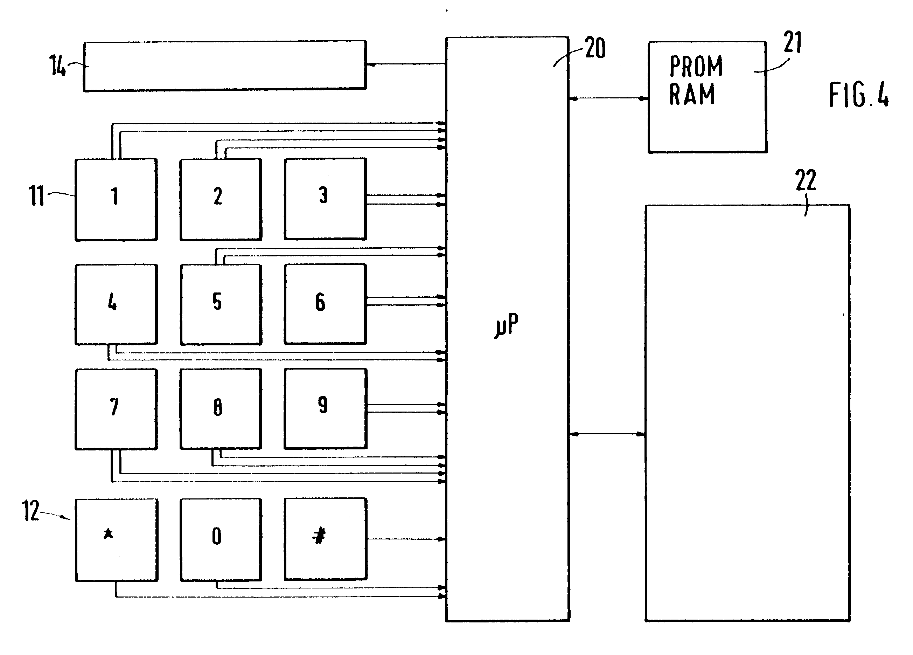

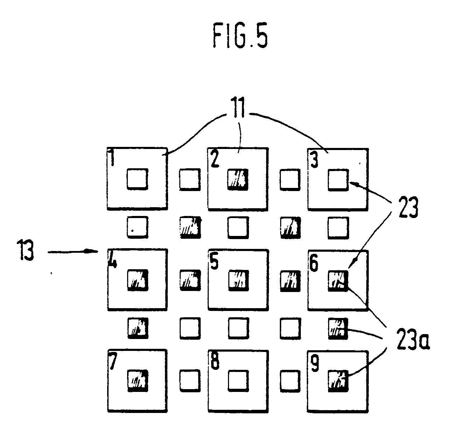

Ausführungsbeispiele der Erfindung sind in Figur 1 bis 5 dargestellt. Es zeigen Figur 1 ein Gerät mit einer bezeige und einer Tastatur zur erfindungsgemäßen Eingabe alphanumerischer Zeichen, Figur 2 zeigt eine Kontaktanordnung einer Eingabetaste der Tastatur, Figur 3 zeigt die Tastatur nach Figur 1 mit einer Buchstabeneingabe, Figur 4 ein Blockschaltbild des Gerätes und Figur 5 zeigt die Anordnung optischer Anzeigen auf der Tastatur.

In Figur 1 ist die Zifferntastatur eines Eingabegerätes 10 mit den als 3x3-Block zusammengefaßten Tasten 11 für die Ziffern 1-9 und dem 1x3-Block 12 mit den Tasten für die Ziffer 0 und für die Zeichen "*" und "#" dargestellt. Der 3x3-Block dient neben der Zifferneingabe als Schreibfeld 13 für den Finger. Er ist farblich und räumlich von dem 1x3-Block 12 abgesetzt, der zur Steuerung der Eingabe dient. Durch Wahl des Abstandes und der Oberfläche der Tastenköpfe der Tasten 11 ist dafür gesorgt, daß stetige Schreibewegungen mit dem Finger ausgeführt werden können. Ein Anzeigefeld 14 für alphanumerische Zeichen, z. B. eine Flüssigkristallanzeige, dient zur Rückmeldung der Eingabe und zur Darstellung von Hinweisen für den Benutzer (Benutzerführung). Die Schreibbewegungen des Fingers, z. B. des Zeigefingers, auf dem Schreibfeld 13 werden dadurch erfaßt, daß die 9 Tasten dieses Blockes neben ihrem üblichen Sensor zur Erfassung der Tastenbetätigung mit einem zusätzlichen Sensor zur Erfassung der Schreibbewegung ausgestattet sind. Der zusätzliche Sensor kann die Erfassung der Fingerbewegung z. B. optisch, mechanisch, kapazitiv oder piezoresistiv durchführen.

Figur 2 zeigt beispielhaft die mechanische Erfassung durch einen zweiten Schaltkontakt 15, der dem üblichen Schaltkontakt 16 der Tasten 11 hinzugefügt wird. Beim Berühren des Tastenkopfes 17 wird der Schaltkontakt 15 geschlossen und damit erfaßt, daß diese Taste auf dem Schreibweg eines geschriebenen Zeichens liegt. Erst beim Drücken der Taste mit einer durch die Kraft-Weg-Charakteristik vorgegebenen Mindestkraft wird der Schaltkontakt 16 geschlossen und damit eine Zifferneingabe in üblicher Weise erkannt bzw. bewirkt.

Die getrennte Erfassung von Schreibvorgang einerseits und Tastenbetätigung zur Zifferneingabe andererseits kann mit Hilfe anderer Sensoren oder mit ein und denselben Sensoren erfolgen. Wichtig ist, daß die beiden Eingabearten dadurch getrennt erfaßt werden können, daß der Benutzer dieses z. B. durch eine Umschaltung vorwählt oder zur Zifferneingabe eine vorgegebene Mindestkraft überwinden muß.

Eine Möglichkeit, auf einen zusätzlichen Sensor pro Taste zu verzichten, bietet z. B. die Folientastatur, bei der unter einer das Tastenfeld bedeckenden Folie z. B. mechanische Kontakte angeordnet sind, die durch den Finger nach Überwindung eines Druckpunktes aktiviert werden. Weitere Möglichkeiten zur Realisierung der Schreibeingabe bieten andere Sensoren, die zur Erfassung der Berührung durch den Finger geeignet sind, z. B. optische oder kapazitive Sensoren. Die Eingabe von Ziffern kann hier entweder durch Schreiben oder durch Berühren der den Ziffern zugeordneten Felder (virtuelle Tastatur) erfolgen. Gegebenenfalls ist zur Unterscheidung von Ziffern und Buchstabeneingabe eine Umschalttaste z. B. im Block 12 vorzusehen. Der Rechner bzw. Microprozessor zur Signalverarbeitung ist vorzugsweise ebenfalls in Gerät 10 angeordnet, kann sich aber gegebenenfalls außerhalb des Geräten 10 befinden und über eine Schnittstelle mit der Anzeige 14 und den Tasten 11 und 12 verbunden sein.

Figur 3 zeigt beispielhaft durch Pfeile 18 angedeutet den Schreibweg beim Buchstaben "E". Die Tastenzeilen und -spalten veranlassen den

Schreiber, vorzugsweise horizontale und vertikale Linienelemente zu verwenden. Ferner bietet das Schreibfeld 13 des 3x3-Blocks eine Hilfe bei Schreiben von Zeichen mit einheitlicher Größe. Dadurch wird die anschließende automatische Mustererkennung durch den Rechner wesentlich vereinfacht. Auf der optischen Anzeige 14 erhält der Schreiber eine Rückmeldung, welches Zeichen aufgrund des Schreibvorganges erkannt wurde. Eine Schreibmarke (Cursor) 19 dient zur Korrektur von Schreib- oder Erkennungsfehlern. Auf der Anzeige 14 können auch Informationen zur Führung des Benutzers ausgegeben werden, z. B. ein Hinweis zur Wiederholung der letzten Eingabe.

Bei der Zifferneingabe hat der Benutzer die Wahl, ob er in üblicher Weise die Zifferntasten drückt oder mit dem Finger schreibt.

Die für den Schreibvorgang nicht benutzten Tasten des 1x3-Blockes 12 und gegebenenfalls zusätzliche Tasten können zur Steuerung des Eingabevorganges verwendet werden; beispielsweise Taste "0" als Buchstaben- oder-Textendetaste (ENTER) und die Tasten "*" und "#" zur Steuerung der Schreibmarke 19 beim Korrekturvorgang (LINKS, RECHTS).

Figur 4 zeigt das Blockschaltbild des Gerätes 10 zur Schreibeingabe in Verbindung mit der Zifferntastatur 11. Die Schalterpaare der Tasten 1 bis 9 gemäß Figur 2 sowie die Schalter der Tasten "*", "0" und "#" werden von einem rechner 20, z. B. einem Mikroprozessor, abgefragt. Mit den bekannten Methoden der Mustererkennung werden die auf den Tasten 1 bis 9 geschriebenen Zeichen klassifiziert. Die Verarbeitungsprogramme und Referenzmuster hierfür sind in dem S,eicher 21 abgelegt. Auf der optischen Anzeige 14 wird das Ergebnis des Klassifikationsprozesses angezeigt, das der Schreiber mit den Steuertasten des 1x3-Blockes 12 korrigieren kann. Das Ergebnis wird sogleich im Speicher 21 zwischengespeichert. Falls in wenigen Fällen die Musterklassifikation nicht zu einem eindeutigen Ergebnis führt, können die alternativen Zeichen zyklisch auf der Anzeige 14 dargestellt werden. Der Schreiber wählt dann durch Tastenbetätigung das richtige Zeichen aus. In manchen Fällen ist es nützlich, in einem Lernvorgang das Mustererkennungsverfahren an die Eigenheiten des Schreibers anzupassen. Hierfür gibt der Schreiber in einem speziellen Lernvorgang die Zeichen des Alphabetes ein, die als Referenzmuster gespeichert werden.

Nach Abschluß der Eingabe gibt der Rechner 20 die eingegebenen, zwischengespeicherten Daten an das zu steuernde technische Gerät 22 weiter, was beispielsweise eine Navigationsanlage eines kraftfahrzeuges sein kann.

Gemäß der Erfindung beginnt die automatische Mustererkennung bereits während der Eingabe eines Zeichens. Bei einer Reihe von Buchstaben kann auf diese Weise erreicht werden, daß der Benutzer diese nur teilweise schreiben muß. Beim Buchstaben "S" z. B. ist die Erkennung bereits nach der Hälfte des Schreibweges möglich. Allerdings erfordert , diese Vorgehensweise zusätzliche Maßnahmen bei Zeichen, die als Teil in anderen enthalten sind, wie z. B. "F". Hier ist vor Ausgabe des Erkennungsergebnisses eine Pause einzulegen, in der geprüft wird, ob der Schreibvorgang fortgesetzt wird. Bei einer sehr schnell arbeitenden Mustererkennung bzw. bei langsamer Schreibbewegung des Fingers kann diese gegebenenfalls vorzeitig beendet werden, sobald auf der optischen Anzeige 14 der gewünschte Buchstabe erscheint.

Ferner kann bei Eingabe von Wörtern die Redundanz ausgenützt werden, indem nach jedem Zeichen geprüft wird, ob die bisher eingegebenen Zeichen bereits ausreichen, um eine eindeutige Auswahl aus einem gespeicherten Vokabular treffen zu können. Dadurch wird vom Benutzer nur das Schreiben der mindestens notwendigen Buchstaben verlangt.

Eine weitere Möglichkeit zur Verbesserung der Rückmeldung des eingegebenen Zeichens während des Schreibvorganges und danach ist die Ausstattung der Tastenkappen der Schreibfläche mit je einer binären optischen Anzeige, z. B. realisiert durch je eine Leuchtdiode. Dadurch können dem Schreiber die während des Schreibvorganges berührten Tasten angezeigt werden. Irrtümlicherweise berührte Tasten, die zu einer Rückweisung oder einer Fehlerkennung des Zeichens bei der Mustererkennung führen, können durch erneutes Berühren gelöscht werden. Zur eindeutigen Unterscheidung aufgrund des optischen Erscheinungsbildes können nicht nur die Tasten 11 des Schreibfeldes 13 mit je einer binären optischen bezeige ausgestattet, sondern auch die Zwischenräume. Figur 5 zeigt beispielhaft ein Anordnungsprinzip von optischen Anzeigen 23. Auch eine Anordnung sämtlicher optischer Anzeigen neben den Tasten ist möglich. Die angesprochenen optischen zeigen 23a machen deutlich, daß auf dem Schreibfeld 13 der Buchstabe "A" eingegeben wurde.

Schließlich besteht die Möglichkeit, die direkte Rückmeldung des Schreibvorganges in dem Anzeigenfeld 14 darzustellen.

## Patentansprüche

1. Verfahren zur Eingabe von Schrifzeichen in Geräten unter Verwendung einer Zifferntastatur in einem Schreibfeld, einer optischen Anzeige (14) und eines Digitalrechners (20), in dem zur Erkennung der handschriftlich mit dem Finger in Blockschrift auf der Zifferntastatur eingegebenen Zeichen die Schreibbewegung des Fingers auf dem Schreibfeld (13) durch an den Tasten (11) der Zifferntastatur angeordnete Sensoren (15) erfaßt wird und die dabei von den Sensoren (15) abgegebenen Signalfolgen in dem Digitalrechner (20) mit Hilfe einer Mustererkennung in der Weise verarbeitet werden, daß die Schreibbewegungen des Fingers als Funktion des Ortes und der Richtung als Schriftzeichen erkannt und abgespeichert werden, dadurch gekennzeichnet, daß mit der Mustererkennung bereits während des Schreibvorganges für ein Schriftzeichen begonnen und diese solange fortgesetzt wird, bis eine eindeutige Erkennung des eingeschriebenen Zeichens erfolgt ist und der Benutzer den Schreibvorgang für dieses Zeichen beenden kann.

2. Verfahren zur Schreibeingabe gemäß Anspruch 1, dadurch gekennzeichnet, daß auf der optischen Anzeige (14) eine Rückmeldung des erkannten Schriftzeichens erfolgt.

3. Verfahren zur Schreibeingabe nach Anspruch 1 und 2, dadurch gekennzeichnet, daß die Rückmeldung des Schreib- und Erkennungsvorganges durch den Tasten (11) des Schreibfeldes (13) zugeordnete, binäre, optische Anzeigen erfolgt.

4. Verfahren zur Schreibeingabe nach einem der Ansprüche 1 bis 3, dadurch gekennzeichnet, daß Tasten (12) außerhalb des Schreibfeldes (13) bei der Steuerung des Eingabevorganges zur Verschiebung einer Schreibmarke (19) in der optischen Anzeige (14) und/oder zur Beendigung der Buchstaben- oder Texteingabe betätigt werden.

5. Verfahren zur Schreibeingabe nach einem der Ansprüche 1 bis 4, dadurch gekennzeichnet, daß eine Ziffer durch Berühren einer Taste (11) des entsprechenden realen oder virtuellen Schreibfeldes (13) und ein Buchstabe durch Schreibbewegungen des Fingers über mehrere Tasten (11) auf dem gleichen realen oder virtuellen Schreibfeld (13) eingegeben wird.

6. Vorrichtung zur Durchführung des Verfahrens zur Schreibeingabe nach einem der Ansprüche 1 bis 5, dadurch gekennzeichnet, daß die Tasten (11) des Schreibfeldes (13) mit mechanischen, optischen, kapazitiven oder piezoresistiven Sensoren (15) zur Erfassung der Schreibbewegung des Fingers ausgestattet und mit einem Digitalrechner (20) zur Musterehennung der während der Schreibbenegung erzeugten Sensorsignale verbunden sind und daß binäre optische Anzeigen (23) auf den Tastenköpfen (17) der Tasten (11) des Schreibfeldes (13) und/oder jeweils daneben bzw. dazwischen plaziert sind.

## Claims

1. Process for the input of characters in apparatus employing a numerical keyboard in a writing field, an optical display (14) and a digital computer (20), in which, for recognising the handwritten characters entered with the finger in blocked lettering on the numerical keyboard, the writing movement of the finger on the writing field (13) is recorded by sensors (15) arranged at the keys (11) of the numerical keyboard, and the signal trains thereby output by the sensors (15) are processed in the digital computer (20) with the aid of a pattern recognition means in such a way that the writing movements of the finger are recognised and stored as characters as a function of the location and of the direction, characterised in that the pattern recognition for a character commences already during the writing operation and this is continued until the written character has been unambiguously recognised and the user can terminate the writing operation for this character.

2. Process for writing input according to Claim 1, characterised in that feedback of the character recognised is provided on the optical display (14).

3. Process for writing input according to Claims 1 and 2, characterised in that the feedback of the writing and recognition operation is provided by binary optical indicators assigned to the keys (11) of the writing field (13).

4. Process for writing input according to one of Claims 1 to 3, characterised in that keys (12) outside the writing field (13) are actuated during the control of the input operation for moving a cursor (19) in the optical display (14) and/or for terminating the letter or text input.

5. Process for writing input according to one of Claims 1 to 4, characterised in that a digit is entered by touching a key (11) of the corresponding real or virtual writing field (13) and a letter is entered by writing movements of the finger over a plurality of keys (11) on the same real or virtual writing field (13).

6. Device for carrying out the process for writing input according to one of Claims 1 to 5, characterised in that the keys (11) of the writing field (13) are equipped with mechanical, optical, capacitive or piezoresistive sensors (15) for recording the writing movement of the finger and are connected to a digital computer (20) for pattern recognition of the sensor signals generated during the writing movement, and in that binary optical indicators (23) are placed on the key tops (17) of the keys (11) of the writing field (13) and/or beside or between them in each case.

**Revendications**

1. Procédé d'introduction de signes d'écriture dans des appareils en utilisant un clavier de chiffres dans un champ d'écriture, un moyen d'affichage optique (14) et un calculateur numérique (20), qui, pour reconnaître l'écriture manuelle en caractères d'imprimerie, avec le signe introduit par le clavier de chiffres, détecte le mouvement d'écriture du doigt sur le champ d'écriture (13) à l'aide de capteurs (15) équipant les touches (11) du clavier de chiffres et la suite des signes fournis par les capteurs (15) sont traités dans le calculateur numérique (20) à l'aide d'une reconnaissance de modèle de façon à reconnaître et mettre en mémoire les mouvements d'écriture du doigt en fonction du lieu et de la direction du signe d'écriture, procédé caractérisé en ce que la reconnaissance du modèle commence déjà pendant l'opération d'écriture d'un signe d'écriture et cette reconnaissance se poursuit jusqu'à ce qu'il y ait une reconnaissance sans équivoque du signe écrit et que l'utilisateur ait terminé l'opération d'écriture de ce signe.

2. Procédé d'introduction d'une écriture selon la revendication 1, caractérisé par un signal en retour du signe d'écriture reconnu sur le moyen d'affichage optique (14).

3. Procédé d'introduction d'écriture selon la revendication 1 et 2, caractérisé en ce que le signal en retour de l'opération d'écriture et de reconnaissance se fait par des moyens d'affichage optique binaires associés aux touches (11) du champ d'écriture (13).

4. Procédé d'introduction d'écriture selon l'une des revendications 1 à 3, caractérisé en ce que les touches (12) sont actionnées en dehors du champ d'écriture (13) par la commande de l'opération d'introduction, par déplacement d'un index d'écriture (13) de l'affichage optique (14) et/ou pour la terminaison de l'introduction des lettres ou du texte.

5. Procédé pour l'introduction d'écriture selon l'une des revendications 1 à 4, caractérisé en ce qu'un chiffre s'introduit par le contact d'une touche (11) du champ d'écriture réel ou virtuel (13) correspondant et une lettre s'introduit par les mouvements d'écriture du doigt sur plusieurs touches (11) sur le même champ d'écriture réel ou virtuel (13).

6. Dispositif pour la mise en oeuvre du procédé pour l'introduction d'écriture selon l'une des revendications 1 à 5, caractérisé en ce que les touches (11) du champ d'écriture (13) sont équipées de capteurs mécaniques optiques capacitifs ou piézoélectriques (15) pour saisir le mouvement d'écriture du doigt et sont reliées à un calculateur numérique (20) pour la reconnaissance du modèle des signaux de capteur générés pendant le mouvement d'écriture, et en ce que des moyens d'affichage optique binaires (23) sont prévus sur les têtes (17) des touches (11) du champ d'écriture (13) et/ou chaque fois à côté ou entre les touches.

FIG.1

FIG.2

FIG.3 ✓

EP 0 412 961 B1

FIG.4

FIG.5